# EUROPEAN PATENT SPECIFICATION

(11) **EP 4 520 608 B1**
(45) Date of publication and mention of the grant of the patent: **17.12.2025**
(21) Application number: 24190892.0
(22) Date of filing: 25.07.2024
(51) Int. Cl.: B60W 50/04, B60W 50/14, B60W 60/00, B60W 50/02

(54) **AUTONOMOUS DRIVING SYSTEM**
AUTONOMES FAHRSYSTEM
SYSTÈME DE CONDUITE AUTONOME

(30) Priority: 11.09.2023 JP 2023146845
(43) Date of publication of application: 12.03.2025
(73) Proprietor: TOYOTA JIDOSHA KABUSHIKI KAISHA, Toyota-shi, Aichi-ken 471-8571 (JP)
(72) Inventor: OHSUGI, Masamichi, Tokyo 103-0022 (JP)
(74) Representative: J A Kemp LLP

(56) References cited:
- EP-A1- 3 608 194
- US-A1- 2018 267 549
- US-A1- 2018 348 763
- US-A1- 2021 300 405

## Description

### TECHNICAL FIELD

The present invention relates to an autonomous driving system.

### CROSS-REFERENCE TO RELATED APPLICATION

This application claims the benefit of priority from Japanese Patent Application No. 2023-146845, filed on September 11, 2023.

### BACKGROUND

In the related art, there is known a technology of predicting autonomous driving causing shaking of a vehicle based on prior information acquired before autonomous driving control is executed, and issuing a notification about behavior information of the vehicle that causes the predicted shaking to a passenger (for example, Japanese Patent Application Laid-Open No. 2018-112850).

In autonomous driving in which a path is planned by using a path planning model which is a machine learning model, a path that influences a periphery of the vehicle may be planned. In this case, there is a possibility that an occupant cannot recognize whether or not such a path is a normal planning result of the path planning model.

US 2018/0348763 discloses an autonomous driving system in accordance with the pre-characterizing section of claim 1.

### SUMMARY

According to one aspect of the present invention, there is provided an autonomous driving system that plans a path of autonomous traveling of a vehicle by using a path planning model which is a machine learning model for planning the path. The autonomous driving system includes a path planning unit configured to plan the path by the path planning model based on a detection result of an on-vehicle sensor of the vehicle and map information, a reference path calculation unit configured to calculate a reference path based on at least one of the detection result of the on-vehicle sensor and the map information, an influence degree calculation unit configured to calculate an influence degree with which a periphery of the vehicle is influenced by autonomous traveling of the vehicle along the planned path based on a comparison result between the planned path and the reference path, a threshold value calculation unit configured to calculate an influence degree threshold value which is a threshold value of the influence degree based on a peripheral situation of the vehicle, and a notification controller configured to issue a notification to an occupant of the vehicle when the influence degree is equal to or greater than the influence degree threshold value.

In accordance with the autonomous driving system according to the aspect of the present disclosure, a degree to which the path of the planning result of the path planning model is different from the reference path is calculated as the influence degree with which the periphery of the vehicle is influenced. For example, the influence degree threshold value is calculated based on reasonableness that the path of the planning result of the path planning model is different from the reference path. In this manner, it is possible to estimate whether or not the path of the planning result of the path planning model conforms with the peripheral situation of the vehicle depending on whether or not the influence degree is equal to or greater than the influence degree threshold value. Accordingly, even though the path planned by the path planning model influences the periphery, the occupant can recognize whether or not such a path is the normal planning result of the path planning model by issuing the notification to the occupant that the path conforms with the peripheral situation of the vehicle.

In the embodiment, when there are other vehicles around the vehicle, the notification controller may issue the notification to the other vehicles. In this case, it is possible to issue the notification to the other vehicles around the vehicle that the path of the planning result of the path planning model conforms with the peripheral situation of the vehicle.

In the embodiment, when at least one of the other vehicles around the vehicle are influenced by the autonomous traveling of the vehicle along the planned path, the notification controller may issue the notification only to the other vehicle influenced by the autonomous traveling among the other vehicles. In this case, it is possible to issue the notification to the other vehicle influenced by the vehicle that the path of the planning result of the path planning model conforms with the peripheral situation of the vehicle.

In accordance with the autonomous driving system according to the aspect of the present disclosure, the occupant can recognize whether or not the path planned by the path planning model is the normal planning result of the path planning model.

### BRIEF DESCRIPTION OF THE DRAWINGS

FIG. 1 is a block diagram showing an autonomous driving system according to an embodiment.
FIG. 2 is a flowchart showing an example of processing of an autonomous driving ECU.

### DETAILED DESCRIPTION

Hereinafter, an embodiment of the present disclosure will be described with reference to the drawings.

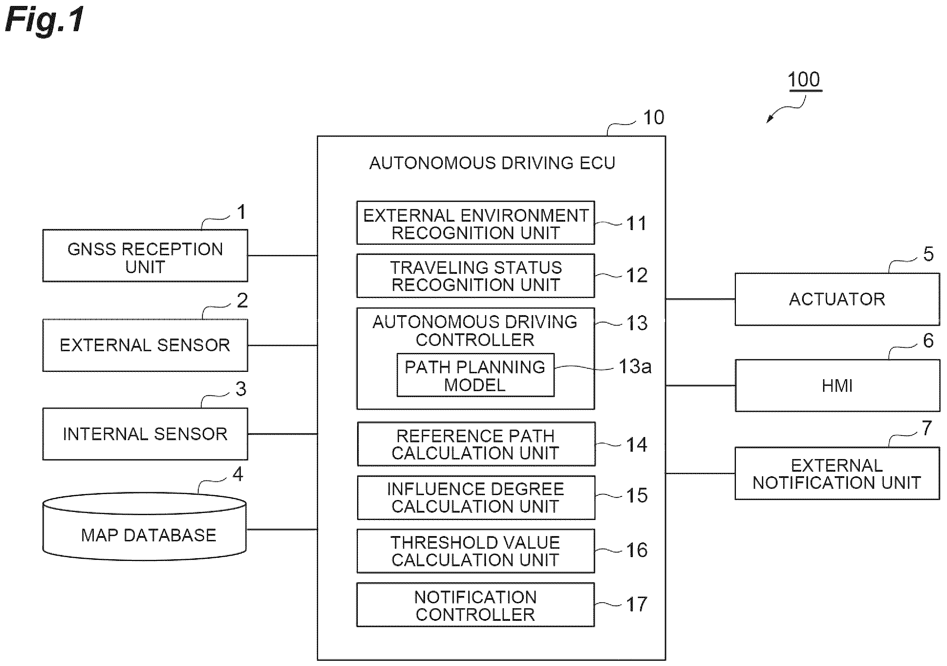

FIG. 1 is a block diagram showing an autonomous driving system according to an embodiment. As shown in FIG. 1, an autonomous driving system 100 is mounted on a vehicle such as a passenger car or a freight car, and executes autonomous driving control of the vehicle. The autonomous driving control is vehicle control for autonomously traveling a vehicle along a planned path without a driver performing a driving operation. Some functions of the autonomous driving system 100 may be executed on a server that can communicate with the vehicle.

In the autonomous driving system 100, the autonomous driving control is performed by using a machine learning model. The autonomous driving system 100 plans a path by using a path planning model which is a machine learning model for planning a path of autonomous traveling of the vehicle. The path planning model is a machine learning model that recognizes an external environment and generates a traveling plan for the autonomous driving control. In the autonomous driving system 100, a machine learning model may be used for generating an instruction for the autonomous driving control. Details of the machine learning model will be described below.

### [Configuration of autonomous driving system]

Hereinafter, a configuration of the autonomous driving system 100 according to the present embodiment will be described with reference to FIG. 1. As shown in FIG. 1, the autonomous driving system 100 includes an autonomous driving electronic control unit (ECU) 10 that integrally manages the system.

The autonomous driving ECU 10 is an electronic control unit having a central processing unit (CPU) and a storage unit. The storage unit is, for example, a read only memory (ROM), a random access memory (RAM), an electrically erasable programmable read-only memory (EEPROM), or the like. In the autonomous driving ECU 10, for example, various functions are realized by the CPU executing a program stored in the storage unit. The autonomous driving ECU 10 may include a plurality of electronic units.

The autonomous driving ECU 10 is connected to a GNSS reception unit 1, an external sensor (on-vehicle sensor) 2, an internal sensor (on-vehicle sensor) 3, a map database 4, an actuator 5, a human machine interface (HMI) 6, and an external notification unit 7.

The GNSS reception unit 1 measures a position of the vehicle (for example, a latitude and a longitude of the vehicle) by receiving a signal from a positioning satellite. The GNSS reception unit 1 transmits the measured positional information of the vehicle to the autonomous driving ECU 10.

The external sensor 2 is a detection device that detects a peripheral situation of the vehicle. The external sensor 2 includes at least one of a camera and a radar sensor. The camera is an imaging device that images an external situation of the vehicle. The camera is provided, for example, on a back side of a windshield of a vehicle and images a front of the vehicle. The camera transmits an imaged image related to the external situation of the vehicle to the autonomous driving ECU 10. The radar sensor is a detection device that detects an object around the vehicle by using radio waves (for example, millimeter waves) or light. The radar sensor includes, for example, a millimeter wave radar or a light detection and ranging (LIDAR). The radar sensor transmits information on the detected object to the autonomous driving ECU 10.

The internal sensor 3 is a detection device that detects a traveling status of the vehicle. The internal sensor 3 includes a vehicle speed sensor and a yaw rate sensor. The vehicle speed sensor is a detector that detects a speed of the vehicle. The vehicle speed sensor transmits information on the detected vehicle speed (wheel speed information) to the autonomous driving ECU 10.

The yaw rate sensor is a detector that detects a yaw rate (rotary angular speed) around a vertical axis of a center of gravity of the vehicle. For example, a gyro sensor can be used as the yaw rate sensor. The yaw rate sensor transmits information on the detected yaw rate of the vehicle to the autonomous driving ECU 10.

The map database 4 is a database that stores map information. The map database 4 is formed within, for example, a storage device, such as a hard disk drive (HDD), mounted on the vehicle. The map information includes positional information of a road, information on a road shape (for example, a type of a curve or a straight line portion, a curvature of the curve, and the like), positional information of an intersection and a junction, positional information of a structure, and the like. The map database 4 may be formed in a server capable of communicating with the vehicle.

The actuator 5 is a device used for controlling the vehicle. The actuator 5 includes at least a drive actuator, a brake actuator, and a steering actuator. The drive actuator controls a driving force of the vehicle by controlling the amount of air (for example, throttle opening degree) supplied to an engine in response to a control signal from the autonomous driving ECU 10. When the vehicle is a hybrid electric vehicle (HEV), in addition to the amount of air supplied to the engine, a control signal from the autonomous driving ECU 10 is input to a motor as a power source, and the driving force is controlled. When the vehicle is a battery electric vehicle (BEV), a control signal from the autonomous driving ECU 10 is input to the motor as the power source, and the driving force is controlled. The motor as the power source in the above cases constitutes the actuator 5.

The brake actuator controls a braking force applied to wheels of the vehicle by controlling a brake system in response to a control signal from the autonomous driving ECU 10. For example, a hydraulic brake system can be used as the brake system. The steering actuator controls the drive of an assist motor that controls a steering torque in an electric power steering system in response to a control signal from the autonomous driving ECU 10. As a result, the steering actuator controls the steering torque of the vehicle.

The HMI 6 is an interface for inputting and outputting information between the autonomous driving ECU 10 and an occupant. The HMI 6 includes, for example, a display, a speaker, and the like provided in a vehicle interior. The HMI 6 outputs an image on the display and outputs sound from the speaker, in response to a control signal from the autonomous driving ECU 10. The display may function as a touch panel. The display may be a center display, a display for navigation, or ahead up display (HUD). The HUD presents information to the occupant by projecting an image onto the windshield of the vehicle.

The external notification unit 7 is provided in the vehicle and outputs at least one of sound and light toward an outside of the vehicle. The external notification unit 7 includes, for example, a sound output device that outputs sound to an outside of the vehicle and a light output device that outputs light to the outside of the vehicle. For example, a lamp provided around the vehicle can be used as the light output device of the external notification unit 7. A type of the lamp is not particularly limited, but for example, a blinker can be used. The light output device of the external notification unit 7 may be a light output device such as an external display separately provided for notification to an oncoming vehicle. For example, a horn provided at a front part of the vehicle can be used as the sound output device of the external notification unit 7. The sound output device of the external notification unit 7 may be a sound output device such as an external speaker separately provided for notification to other vehicles around the vehicle.

Next, a functional configuration of the autonomous driving ECU 10 will be described. The autonomous driving ECU 10 includes an external environment recognition unit 11, a traveling status recognition unit 12, an autonomous driving controller (path planning unit) 13, a reference path calculation unit 14, an influence degree calculation unit 15, a threshold value calculation unit 16, and a notification controller 17.

The external environment recognition unit 11 recognizes an external environment of the vehicle based on a detection result of the external sensor 2. The external environment includes a relative position of the object around the vehicle with respect to the vehicle. The external environment may include a relative speed and a moving direction of the object around the vehicle with respect to the vehicle. The external environment may include information on a type of the object, such as another vehicle, a pedestrian, or a bicycle. The external environment may include information on a division line recognized by known white line recognition or the like. The external environment recognition unit 11 may recognize the external environment of the vehicle from the detection result of the external sensor 2 by using a path planning model 13a.

The traveling status recognition unit 12 recognizes a traveling status of the vehicle based on a detection result of the internal sensor 3. The traveling status includes a vehicle speed of the vehicle, an acceleration of the vehicle, and a yaw rate of the vehicle. Specifically, the traveling status recognition unit 12 recognizes the vehicle speed of the vehicle based on the vehicle speed information of the vehicle speed sensor. The traveling status recognition unit 12 recognizes the acceleration of the vehicle based on vehicle speed information of an acceleration sensor. The traveling status recognition unit 12 recognizes an orientation of the vehicle based on the yaw rate information of the yaw rate sensor.

The autonomous driving controller 13 executes the autonomous driving control of the vehicle based on the external environment (peripheral environment) recognized by the external environment recognition unit 11 and the traveling status of the vehicle recognized by the traveling status recognition unit 12. The autonomous driving controller 13 may further perform the autonomous driving control by using the measured positional information of the vehicle by the GNSS reception unit 1 and the map information of the map database 4.

The autonomous driving controller 13 performs the autonomous driving control of the vehicle by using the path planning model 13a. The path planning model 13a is, for example, a neural network such as a convolutional neural network (CNN). The neural network can include a plurality of layers including a plurality of convolutional layers and pooling layers. A deep learning network through deep learning by deep learning is used as the neural network. A recurrent neural network (RNN) can be used for the path planning model 13a.

The autonomous driving controller 13 sets a target route for the autonomous driving control based on, for example, a destination set by the occupant, the positional information of the vehicle, and the map information. The target route is a route on which the vehicle travels by the autonomous driving control. The destination may be a location that is automatically proposed by the autonomous driving system 100. The target route may be set in advance in a well-known navigation system and may be acquired by the autonomous driving system 100 from the navigation system.

The autonomous driving controller 13 generates a traveling plan of the autonomous driving control based on the target route, the positional information of the vehicle, and the map information. The traveling plan includes a vehicle speed plan of the vehicle and a path plan of the vehicle. The vehicle speed plan is, for example, data in which a target vehicle speed in the autonomous driving control is associated with a set vertical position set at a predetermined interval (for example, 1 m) on the target route. The set vertical position may be set based on a traveling time of the vehicle instead of a distance. The path plan is data related to a path on the target route. The path is a trajectory on which the vehicle that is performing the autonomous driving control is scheduled to travel on the target route. The path plan can be, for example, data of a steering angle or a lateral position of the vehicle corresponding to the set vertical position on the target route.

The autonomous driving controller 13 generates the traveling plan by using, for example, the path planning model 13a. The autonomous driving controller 13 causes the path planning model 13a to output the traveling plan by inputting the target route, the positional information of the vehicle, and the map information. The path planning model 13a in this case can be a neural network trained to output the traveling plan from the target route, the positional information of the vehicle, and the map information.

The autonomous driving controller 13 plans a path by the path planning model 13a based on the detection result of the external sensor 2 of the vehicle and the map information. For example, the autonomous driving controller 13 further inputs a current external environment and traveling status to the path planning model 13a to re-output (correct) the traveling plan. The path planned by the path planning model 13a mentioned here corresponds to a path of the traveling plan corrected according to the external environment recognized based on the detection result of the external sensor 2. The path planning model 13a in this case is a neural network trained to output the traveling plan by using, as inputs, the target route, the positional information of the vehicle, the map information, the external environment, and the traveling status. The path planning model 13a may use, as an input, a traveling plan output immediately before.

The "corrected path of the traveling plan" means a corrected path of the traveling plan that influences the periphery of the vehicle. The "path that influences the periphery of the vehicle" means, for example, a path of the traveling plan corrected such that a lane change of the vehicle to an adjacent lane, protrusion of the vehicle into an adjacent lane, deceleration of the vehicle, and the like are newly scheduled to be performed. Such correction of the path of the traveling plan may be correction corresponding to a relative position and a relative speed with respect to a surrounding vehicle such as a preceding vehicle, or the detection result of the external sensor 2 such as an obstacle on the road on which the vehicle travels. Such correction of the path of the traveling plan may be correction corresponding to map information, such as a decrease in the number of lanes of the road on which the vehicle travels, construction information of the road on which the vehicle travels, or the presence of a sharp curve in front of the road on which the vehicle travels.

The correction of the traveling plan path may include correction in which the path planned by the path planning model 13a is corrected to conform with the peripheral situation of the vehicle, and correction in which the path planned by the path planning model 13a is corrected not to be conform with the peripheral situation of the vehicle. The correction that conforms with the peripheral situation of the vehicle means reasonable correction of the path that is not problematic in recognition processing and path planning processing by the path planning model 13a and corresponds to the peripheral situation of the vehicle. The correction that does not conform with the peripheral situation of the vehicle means, for example, unreasonable correction of the path that is in comparison with the peripheral situation of the vehicle, such as the occurrence of some calculation error in the recognition processing or the path planning processing by the path planning model 13a.

The autonomous driving controller 13 executes the autonomous driving control by changing the traveling status of the vehicle by transmitting a control signal to the actuator 5 based on current positional information of the vehicle and the traveling plan.

The reference path calculation unit 14 calculates a reference path based on the detection result of the external sensor 2 or the map information. The reference path means a path that is a reference for the corrected path of the traveling plan. For example, when the traveling plan is corrected by the autonomous driving controller 13 based on the detection result of the external sensor 2, the reference path calculation unit 14 calculates the path before the correction as the reference path.

Specifically, on the assumption that a calculation error may occur in a recognition result of the division line of the path planning model 13a, the reference path calculation unit 14 may calculate, as the reference path, an extension direction of a division line included in the map information. On the assumption that a calculation error may occur in a recognition result of the object around the vehicle by the path planning model 13a, the reference path calculation unit 14 may calculate, as the reference path, a trajectory of a preceding vehicle in a lane in which the vehicle is traveling with respect to the lane. On the assumption that a calculation error may occur in the vehicle speed plan planned by the path planning model 13a, the reference path calculation unit 14 may calculate, as the reference path, a trajectory corresponding to a vehicle speed range that can be taken by the vehicle based on a position of the vehicle in the lane in which the vehicle is traveling, a relative position and a relative speed with respect to another vehicle.

The influence degree calculation unit 15 calculates an influence degree with which the periphery of the vehicle is influenced by the autonomous traveling of the vehicle along the planned path based on a comparison result between the planned path and the reference path. The influence degree is an index indicating a degree of influence of the "path that influences the periphery of the vehicle". The influence degree may be a larger numerical value as the degree of influence is larger. The influence degree calculation unit 15 may calculate a larger influence degree, for example, as a distance by which a lateral position of the planned path deviates from a lateral position of the reference path (for example, a distance in a lane width direction) is larger, such as when the planned path is greatly bent. The influence degree calculation unit 15 may calculate a larger influence degree, for example, as a distance by which a vertical position on the planned path deviates from a vertical position on the reference path (error in a distance in a lane extension direction) is larger, such as when the planned path includes deceleration. The influence degree calculation unit 15 may calculate a larger influence degree as the planned path approaches a predicted trajectory of another vehicle around the vehicle, for example, as the planned path includes a lane change or a protrusion of the vehicle into an adjacent lane. The influence degree calculation unit 15 may calculate a larger influence degree as a size of a range influenced by the planned path is larger. The influence degree calculation unit 15 may calculate a larger influence degree as the number of other vehicles influenced by the planned path is larger.

The threshold value calculation unit 16 calculates an influence degree threshold value based on the peripheral situation of the vehicle. The influence degree threshold value is a threshold value of the influence degree used to determine whether or not the path planned by the path planning model 13a conforms with the peripheral situation of the vehicle. The threshold value calculation unit 16 calculates a smaller influence degree threshold value when there is a peripheral situation of the vehicle in which it is reasonable for the path of the vehicle to be corrected than when there is no peripheral situation of the vehicle in which it is reasonable for the path of the vehicle to be corrected. The threshold value calculation unit 16 may calculate a smaller influence degree threshold value when there is a peripheral situation of the vehicle in which it is reasonable to the extent that it is natural for the path of the vehicle to be corrected than when there is a peripheral situation of the vehicle in which it can be said that it is reasonable for the path of the vehicle to be corrected to some extent.

Specifically, when the presence of another vehicle that stops at a left end of a lane in which the vehicle is traveling is recognized such that the other vehicle protrudes into the lane, the threshold value calculation unit 16 may determine that there is a peripheral situation of the vehicle in which it is reasonable to the extent that it is natural for the path of the vehicle to be corrected such that the vehicle travels to lean to an adjacent lane on a right side while decelerating, and may reduce the influence degree threshold value than in the situation before such presence of the other vehicle is recognized. When the presence of another vehicle that starts to travel to lean to the vehicle while traveling the adjacent lane on the right side is recognized, the threshold value calculation unit 16 may determine that there is a peripheral situation of the vehicle in which it can be said that it is reasonable for the path of the vehicle to be corrected to some extent such that the vehicle travels to an adjacent lane on a left side to avoid the other vehicle or the vehicle decelerates to take a distance from the other vehicle, and may reduce the influence degree threshold value that in the situation before such presence of the other vehicle is recognized. When turning-on of a brake lamp of a preceding vehicle several vehicles ahead of the vehicle on an expressway is recognized, the threshold value calculation unit 16 may determine that there is a peripheral situation of the vehicle in which it can be said that it is reasonable for the path of the vehicle to be corrected to some extent such that the vehicle decelerates, and may reduce the influence degree threshold value than in the situation before such presence of the preceding vehicle is recognized. The threshold value calculation unit 16 may adjust the influence degree threshold value according to a trajectory type (for example, setting such as safety emphasis or minimum movement time) set in advance by the occupant, and may adjust a timing at which it is determined whether or not the planned path conforms with the peripheral situation of the vehicle according to the trajectory type.

The notification controller 17 issues a notification to the occupant of the vehicle when the influence degree is equal to or greater than the influence degree threshold value. The notification controller 17 determines, for example, whether or not the influence degree is equal to or greater than the influence degree threshold value, and issues the notification to the occupant of the vehicle that the "path conforms with the peripheral situation of the vehicle", for example, by text display or sound by using the display or the speaker of the HMI 6 when it is determined that the influence degree is equal to or greater than the influence degree threshold value.

The "path conforms with the peripheral situation of the vehicle" can include the correction content of the path of the vehicle and the peripheral situation of the vehicle for which the correction of the path of the vehicle is required. The correction content of the path of the vehicle may be, for example, image-displayed by distinguishing trajectories of the vehicle before and after the correction by a solid line and a broken line, or may be described by sound. The reason why the correction of the vehicle path is required may be, for example, an object in front of the vehicle that is a cause of the correction of the path of the vehicle may be highlighted (for example, surrounded by a square) on the HUD. The "path conforms with the peripheral situation of the vehicle" can be used as a known method in other aspects that can be recognized by the occupant.

When there are other vehicles around the vehicle, the notification controller 17 issues the notification to the other vehicles. For example, when at least one of the other vehicles around the vehicle are influenced by the autonomous traveling of the vehicle along the planned path, the notification controller 17 issues the notification only to the other vehicle influenced by the autonomous traveling among the other vehicles. The notification controller 17 outputs at least one of the sound and the light toward the outside of the vehicle, for example, by using the external notification unit 7, to issue the notification to only the other vehicle influenced by the autonomous traveling among the other vehicles. The sound output to the outside of the vehicle may be a warning sound of the horn. The warning sound of the horn may be continuously output or intermittently output. The light output to the outside of the vehicle may be the turning-on and -off of the blinker for the other vehicle.

When other vehicles around the vehicle are not influenced (when there are no other vehicles influenced by the autonomous traveling) by the autonomous traveling of the vehicle along the planned path, the notification controller 17 may issue the notification to the other vehicles around the vehicle.

Incidentally, the notification controller 17 may issue the notification to the occupant of the vehicle at a timing at which it is determined that the correction of the corresponding path is required according to the trajectory type (for example, setting such as safety emphasis or minimum movement time) set in advance by the occupant. The notification controller 17 may issue the notification to the occupant of the vehicle at a timing at which it is determined that it is necessary to perform the correction of the path in which a certain amount or more of steering speed or acceleration or deceleration is required.

At a timing at which path adjustment including adjustment of a positional relationship between relative positions shared between the vehicle and other vehicles in the autonomous traveling of the vehicle along the planned path is completed, the notification controller 17 may issue the notification to the other vehicles. When the planned path involves deceleration, the notification controller 17 may delay a timing at which the notification is issued to a subsequent vehicle present at a position farther by a predetermined distance when there is no subsequent vehicle at a position closer by a predetermined distance behind the vehicle.

### [Operation of autonomous driving system]

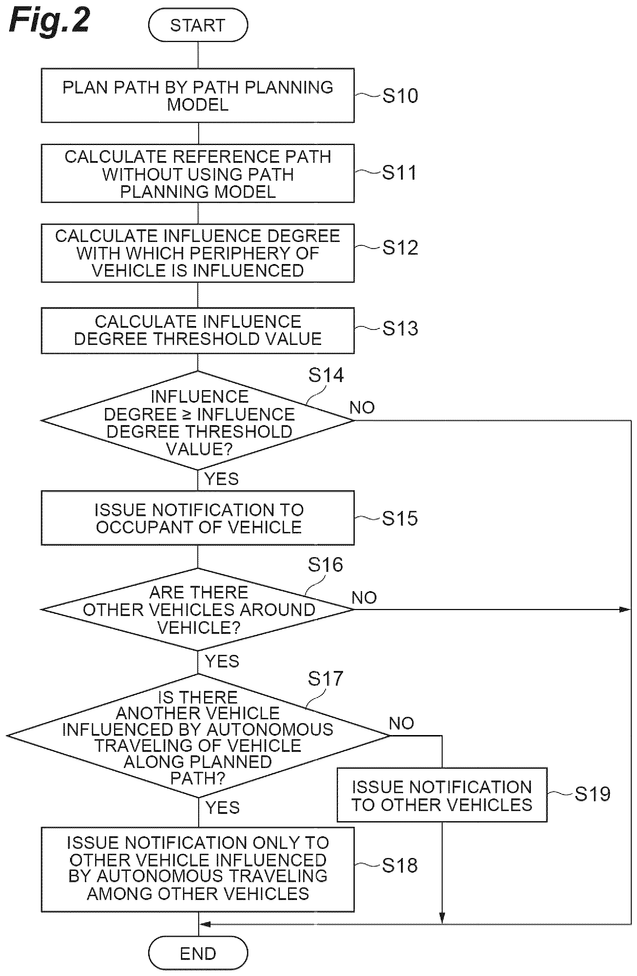

Subsequently, an operation of the autonomous driving system 100 will be described with reference to the drawings. FIG. 2 is a flowchart showing an example of processing of the autonomous driving ECU. The processing of the autonomous driving ECU is executed, for example, during the execution of the autonomous driving control of the vehicle.

As shown in FIG. 2, in step S10, the autonomous driving ECU 10 of the autonomous driving system 100 performs the planning of the path by the path planning model by the autonomous driving controller 13. The autonomous driving controller 13 plans (corrects) the path by the path planning model 13a based on the detection result of the external sensor 2 of the vehicle and the map information.

In step S11**,** the autonomous driving ECU 10 calculates the reference path by the reference path calculation unit 14. The reference path calculation unit 14 calculates a reference path based on the detection result of the external sensor 2 or the map information.

In step S12, the autonomous driving ECU 10 calculates the influence degree with which the periphery of the vehicle is influenced by the influence degree calculation unit 15. The influence degree calculation unit 15 calculates an influence degree with which the periphery of the vehicle is influenced by the autonomous traveling of the vehicle along the planned path based on a comparison result between the planned path and the reference path.

In step S13, the autonomous driving ECU 10 calculates the influence degree threshold value by the threshold value calculation unit 16. The threshold value calculation unit 16 calculates the influence degree threshold value which is the threshold value of the influence degree based on the peripheral situation of the vehicle.

In step S14, the autonomous driving ECU 10 determines whether or not the influence degree is equal to or greater than the influence degree threshold value by the notification controller 17. When the notification controller 17 determines that the influence degree is equal to or greater than the influence degree threshold value (S14: YES), the autonomous driving ECU 10 proceeds to step S15. When the notification controller 17 determines that the influence degree is less than the influence degree threshold value (S14: NO), the autonomous driving ECU 10 terminates the current processing of FIG. 2. Thereafter, the autonomous driving ECU 10 repeatedly performs the processing from step S10 again after a lapse of a certain time.

In step S15, the autonomous driving ECU 10 issues the notification to the occupant of the vehicle by the notification controller 17. The notification controller 17 issues the notification to the occupant of the vehicle that the planned path conforms with the peripheral situation of the vehicle, for example, by using the display or the speaker of the HMI 6.

In step S16, the autonomous driving ECU 10 determines whether or not there are other vehicles around the vehicle by the notification controller 17. When the notification controller 17 determines that there are other vehicles around the vehicle (S16: YES), the autonomous driving ECU 10 proceeds to step S17. When the notification controller 17 determines that there are no other vehicles around the vehicle (S16: NO), the autonomous driving ECU 10 terminates the current processing of FIG. 2. Thereafter, the autonomous driving ECU 10 repeatedly performs the processing from step S10 again after a lapse of a certain time.

In step S17, the autonomous driving ECU 10 determines whether or not there is another vehicle influenced by the autonomous traveling of the vehicle along the planned path by the notification controller 17. When it is determined that there is another vehicle influenced by the autonomous traveling of the vehicle along the path planned by the notification controller 17 (S17: YES), the autonomous driving ECU 10 proceeds to step S18.

In step S18, the autonomous driving ECU 10 issues the notification only to the other vehicle influenced by the autonomous traveling among the other vehicles by the notification controller 17. The notification controller 17 outputs at least one of the sound and the light toward the outside of the vehicle, for example, by using the external notification unit 7, to issue the notification to only the other vehicle influenced by the autonomous traveling among the other vehicles. Thereafter, the processing of FIG. 2 in the current time is terminated. Thereafter, the autonomous driving ECU 10 repeatedly performs the processing from step S10 again after a lapse of a certain time.

On the other hand, when the notification controller 17 determines that there is no another vehicle influenced by the autonomous traveling of the vehicle along the planned path (S17: NO), the autonomous driving ECU 10 proceeds to step S19.

In step S19, the autonomous driving ECU 10 issues the notification to the other vehicle by the notification controller 17. The notification controller 17 issues the notification to other vehicles, for example, by using the external notification unit 7 to output at least one of sound and light toward the outside of the vehicle. Thereafter, the processing of FIG. 2 in the current time is terminated. Thereafter, the autonomous driving ECU 10 repeatedly performs the processing from step S10 again after a lapse of a certain time.

In accordance with the autonomous driving system 100 described above, a degree to which the path of the planning result of the path planning model 13a is different from the reference path is calculated as the influence degree with which the periphery of the vehicle is influenced. For example, the influence degree threshold value is calculated based on reasonableness that the path of the planning result of the path planning model 13a is different from the reference path. In this manner, it is possible to estimate whether or not the path of the planning result of the path planning model 13a conforms with the peripheral situation of the vehicle depending on whether or not the influence degree is equal to or greater than the influence degree threshold value. Accordingly, even though the path planned by the path planning model 13a influences the periphery, the notification indicating that the path conforms with the peripheral situation of the vehicle is notified, and thus, the occupant can recognize that such a path is a normal planning result of the path planning model 13a.

In the autonomous driving system 100, when there are other vehicles around the vehicle, the notification controller 17 issues the notification to the other vehicles. As a result, it is possible to issue the notification to the other vehicles present around the vehicle that the path of the planning result of the path planning model 13a conforms with the periphery of the vehicle.

In the autonomous driving system 100, when another vehicle around the vehicle is influenced by the autonomous traveling of the vehicle along the planned path, the notification controller 17 issues the notification only to the other vehicle influenced by the autonomous traveling among the other vehicles. As a result, it is possible to perform the notification to the other vehicle influenced by the vehicle that the path of the planning result of the path planning model 13a conforms with the peripheral situation of the vehicle.

Hitherto, the embodiment of the present invention has been described above, but the present invention is not limited to the above-described embodiment. The present invention can be carried out in various forms having various changes and improvements based on the knowledge of those skilled in the art, including the above-described embodiment.

In the above embodiment, although the reference path calculation unit 14 calculates the path before the correction as the reference path when the autonomous driving controller 13 corrects the traveling plan by the path planning model 13a based on the detection result of the external sensor 2, for example, the present invention is not limited to this example.

## Claims

1. An autonomous driving system (100) that plans a path of autonomous traveling of a vehicle by using a path planning model (13a) which is a machine learning model for planning the path, the autonomous driving system (100) comprising:
a path planning unit (13) configured to plan the path by the path planning model (13a) based on a detection result of an on-vehicle sensor (2, 3) of the vehicle and map information;
a reference path calculation unit (14) configured to calculate a reference path based on at least one of the detection result of the on-vehicle sensor (2, 3) and the map information;
the autonomous driving system (100) **characterized by** further comprising:
an influence degree calculation unit (15) configured to calculate an influence degree with which a periphery of the vehicle is influenced by autonomous traveling of the vehicle along the planned path based on a comparison result between the planned path and the reference path;
a threshold value calculation unit (16) configured to calculate an influence degree threshold value which is a threshold value of the influence degree based on a peripheral situation of the vehicle; and
a notification controller (17) configured to issue a notification to an occupant of the vehicle when the influence degree is equal to or greater than the influence degree threshold value.

2. The autonomous driving system (100) according to claim 1, wherein, when there are other vehicles around the vehicle, the notification controller (17) is configured to issue the notification to the other vehicles.

3. The autonomous driving system (100) according to claim 2,
wherein, when at least one of the other vehicles around the vehicle are influenced by the autonomous traveling of the vehicle along the planned path, the notification controller (17) is configured to issue the notification only to the other vehicle influenced by the autonomous traveling among the other vehicles.

4. The autonomous driving system (100) according to any of claims 1-3, wherein the path planning unit (13) is further configured to correct the planned path based on the detection result of the external sensor (2).

5. The autonomous driving system (100) according to claim 4, wherein the reference path calculation unit (14) is configured to calculate the reference path before the path planning unit (13) corrects the planned path.

6. The autonomous driving system (100) according to claim 5, wherein the reference path calculation unit (14) is adapted to calculate, as the reference path, an extension direction of a division line included in the map information.

7. The autonomous driving system (100) according to claim 5, wherein the reference path calculation unit (14) is adapted to calculate, as the reference path, a trajectory of a preceding vehicle in a lane in which the vehicle is travelling with respect to the lane.

8. The autonomous driving system (100) according to claim 5, wherein the reference path calculation unit (14) is adapted to calculate, as the reference path, a trajectory corresponding to a vehicle speed range that is taken by the vehicle based on a position of the vehicle in the lane in which the vehicle is traveling, a relative position and a relative speed with respect to another vehicle.

## Patentansprüche

1. Autonomes Fahrsystem (100), das einen Weg für autonomes Fahren eines Fahrzeugs durch Verwenden eines Wegplanungsmodells (13a) plant, das ein Machine-Learning-Modell zum Planen des Wegs ist, wobei das autonome Fahrsystem (100) Folgendes umfasst:
eine Wegplanungseinheit (13), die konfiguriert ist, um den Weg durch das Wegplanungsmodell (13a) basierend auf einem Erfassungsergebnis eines fahrzeuginternen Sensors (2, 3) des Fahrzeugs und Karteninformationen zu planen;
eine Referenzweg-Berechnungseinheit (14), die konfiguriert ist, um einen Referenzweg basierend auf mindestens einem aus dem Erfassungsergebnis des fahrzeuginternen Sensors (2, 3) und den Karteninformationen zu berechnen;
wobei das autonome Fahrsystem (100) **dadurch gekennzeichnet ist, dass** es ferner Folgendes umfasst:
eine Einflussgrad-Berechnungseinheit (15), die konfiguriert ist, um einen Einflussgrad zu berechnen, mit dem ein Umfeld des Fahrzeugs durch autonomes Fahren des Fahrzeugs entlang des geplanten Wegs beeinflusst wird, basierend auf einem Vergleichsergebnis zwischen dem geplanten Weg und dem Referenzweg;
eine Schwellenwertberechnungseinheit (16), die konfiguriert ist, um einen Einflussgradschwellenwert zu berechnen, der ein Schwellenwert des Einflussgrades ist, basierend auf der Umgebungssituation des Fahrzeugs; und
eine Benachrichtigungssteuerung (17), die konfiguriert ist, um eine Benachrichtigung an einen Insassen des Fahrzeugs auszustellen, wenn der Einflussgrad gleich wie oder größer als der Einflussgradschwellenwert ist.

2. Autonomes Fahrsystem (100) nach Anspruch 1,
wobei, wenn andere Fahrzeuge um das Fahrzeug herum sind, die Benachrichtigungssteuerung (17) konfiguriert ist, um die Benachrichtigung an die anderen Fahrzeuge auszustellen.

3. Autonomes Fahrsystem (100) nach Anspruch 2,
wobei, wenn mindestens eines aus den anderen Fahrzeugen um das Fahrzeug herum durch das autonome Fahren des Fahrzeugs entlang des geplanten Wegs beeinflusst werden, die Benachrichtigungssteuerung (17) konfiguriert ist, um die Benachrichtigung nur an das andere Fahrzeug aus den anderen Fahrzeugen auszustellen, das durch das autonome Fahren beeinflusst wird.

4. Autonomes Fahrsystem (100) nach einem der Ansprüche 1-3, wobei die Wegplanungseinheit (13) ferner konfiguriert ist, um den geplanten Weg basierend auf dem Erfassungsergebnis des externen Sensors (2) zu korrigieren.

5. Autonomes Fahrsystem (100) nach Anspruch 4, wobei die Referenzweg-Planungseinheit (14) konfiguriert ist, um den Referenzweg zu berechnen, bevor die Wegplanungseinheit (13) den geplanten Weg korrigiert.

6. Autonomes Fahrsystem (100) nach Anspruch 5, wobei die Referenzweg-Berechnungseinheit (14) angepasst ist, um eine Verlaufsrichtung einer Trennlinie, die in den Karteninformationen beinhaltet ist, als den Referenzweg zu berechnen.

7. Autonomes Fahrsystem (100) nach Anspruch 5, wobei die Referenzweg-Berechnungseinheit (14) angepasst ist, um eine Trajektorie eines vorhergehenden Fahrzeugs in einem Fahrstreifen, auf dem das Fahrzeug fährt, in Bezug auf den Fahrstreifen als den Referenzweg zu berechnen.

8. Autonomes Fahrsystem (100) nach Anspruch 5, wobei die Referenzweg-Berechnungseinheit (14) angepasst ist, um eine Trajektorie entsprechend einem Fahrzeuggeschwindigkeitsbereich, der durch das Fahrzeug eingenommen wird, basierend auf einer Position des Fahrzeugs in dem Fahrstreifen, in dem das Fahrzeug fährt, einer relativen Position und einer relativen Geschwindigkeit in Bezug auf ein anderes Fahrzeug als den Referenzweg zu berechnen.

## Revendications

1. Système de conduite autonome (100) qui planifie un trajet de déplacement autonome d'un véhicule en utilisant un modèle de planification de trajet (13a) qui est un modèle d'apprentissage automatique pour planifier le trajet, le système de conduite autonome (100) comprenant :
une unité de planification de trajet (13) configurée pour planifier le trajet à l'aide du modèle de planification de trajet (13a) sur la base d'un résultat de détection d'un capteur embarqué (2, 3) du véhicule et d'informations cartographiques ;
une unité de calcul de trajet de référence (14) configurée pour calculer un trajet de référence sur la base d'au moins un élément parmi le résultat de détection du capteur embarqué (2, 3) et les informations cartographiques ;
le système de conduite autonome (100) étant **caractérisé en ce qu'**il comprend en outre :
une unité de calcul de degré d'influence (15) configurée pour calculer un degré d'influence avec lequel une périphérie du véhicule est influencée par le déplacement autonome du véhicule le long du trajet planifié sur la base d'un résultat de comparaison entre le trajet planifié et le trajet de référence ;
une unité de calcul de valeur seuil (16) configurée pour calculer une valeur seuil de degré d'influence qui est une valeur seuil du degré d'influence sur la base d'une situation périphérique du véhicule ; et
un dispositif de commande de notification (17) configuré pour émettre une notification à un occupant du véhicule lorsque le degré d'influence est supérieur ou égal à la valeur seuil de degré d'influence.

2. Système de conduite autonome (100) selon la revendication 1,
dans lequel, lorsque d'autres véhicules se trouvent autour du véhicule, le dispositif de commande de notification (17) est configuré pour émettre la notification aux autres véhicules.

3. Système de conduite autonome (100) selon la revendication 2,
dans lequel, lorsqu'au moins un des autres véhicules autour du véhicule est influencé par le déplacement autonome du véhicule le long du trajet planifié, le dispositif de commande de notification (17) est configuré pour émettre la notification uniquement à l'autre véhicule influencé par le déplacement autonome parmi les autres véhicules.

4. Système de conduite autonome (100) selon l'une quelconque des revendications 1 à 3, dans lequel l'unité de planification de trajet (13) est en outre configurée pour corriger le trajet planifié sur la base du résultat de détection du capteur (2) externe.

5. Système de conduite autonome (100) selon la revendication 4, dans lequel l'unité de calcul de trajet de référence (14) est configurée pour calculer le trajet de référence avant que l'unité de planification de trajet (13) ne corrige le trajet planifié.

6. Système de conduite autonome (100) selon la revendication 5, dans lequel l'unité de calcul de trajet de référence (14) est adaptée pour calculer, en tant que trajet de référence, une direction d'extension d'une ligne de division incluse dans les informations cartographiques.

7. Système de conduite autonome (100) selon la revendication 5, dans lequel l'unité de calcul de trajet de référence (14) est adaptée pour calculer, en tant que trajet de référence, une trajectoire d'un véhicule précédent dans une voie dans laquelle le véhicule se déplace par rapport à la voie.

8. Système de conduite autonome (100) selon la revendication 5, dans lequel l'unité de calcul de trajet de référence (14) est adaptée pour calculer, en tant que trajet de référence, une trajectoire correspondant à une plage de vitesse de véhicule qui est prise par le véhicule sur la base d'une position du véhicule dans la voie dans laquelle le véhicule se déplace, d'une position relative et d'une vitesse relative par rapport à un autre véhicule.
